# EUROPÄISCHE PATENTANMELDUNG

(11) **EP 2 781 210 A1**
(43) Veröffentlichungstag der Anmeldung: **24.09.2014**
(21) Anmeldenummer: 14157591.0
(22) Anmeldetag: 04.03.2014
(51) Int. Cl.: A61G 12/00

(54) **Installationssytem**

(30) Priorität: 18.03.2013 DE 102013102753
(71) Anmelder: Frank GmbH, 88471 Laupheim-Bihlafingen (DE)
(72) Erfinder: Frank, Rainer, 88471 Laupheim (DE)
(74) Vertreter: Hentrich, Swen

(57) **Zusammenfassung**

Die Erfindung betrifft ein Installationssystem zum Installieren einer Geräteeinheit in einem Gebäude (3), mit einer gebäudeseitig Betriebsmittelleitungen (4) für Fluide und gegebenenfalls Elektrizität aufweisenden Übergabeeinheit (5). Der Übergabeeinheit (5) sind Betriebsmittelanschlüsse (6) und der Geräteeinheit ist eine Übernahmeeinheit zugeordnet, die zu einer Auswahl der Betriebsmittelanschlüssen (6) korrespondierende Gegenanschlüsse aufweist, zur leckagefreien und reversiblen Kopplung der Geräteeinheit mit der Übergabeeinheit (5).

## Beschreibung

Die Erfindung betrifft ein Installationssystem zum Installieren einer Geräteeinheit in einem Gebäude, mit einer gebäudeseitig Betriebsmittelleitungen für Fluide und gegebenenfalls Elektrizität aufweisenden Übergabeeinheit, der Betriebsmittelanschlüsse zugeordnet sind.

Bei aus dem Stand der Technik bekannten Installationssystemen für Geräteeinheiten, für deren Betrieb unterschiedliche Betriebsmittel benötigt werden, wie beispielsweise Desinfektionsanlagen in medizinischen Einrichtungen aber auch Alltagsgegenstände wie Waschmaschinen oder Spülmaschinen, muss stets Fachpersonal herangezogen werden, um die einzelnen Betriebsmittelleitungen an die jeweilige Geräteeinheit anzuschließen. Zudem besteht die Notwendigkeit, unterschiedliches Fachpersonal zur Installation und Deinstallation der Geräteinheit herbeizuziehen, wenn für den Betrieb der Geräteeinheit neben flüssigen Betriebsmitteln, wie beispielsweise Wasser, auch gasförmige Betriebsmittel, wie beispielsweise Druckluft oder Stickstoff, benötigt werden. So wird auch im Falle eines Gerätetausches - sei es aus Wartungs- oder aus Reparaturgründen - Fachpersonal benötigt, um die Geräteeinheit von den Betriebsmittelleitungen zu trennen und an diese wieder anzuschließen. Insbesondere in Zeiten, in denen gut ausgebildetes Fachpersonal oft nicht in ausreichender Zahl vorhanden ist, bedeutet dies - neben langen Wartezeiten und damit verbundenen Betriebsausfällen - auch immense Wartungs- und/oder Reparaturkosten.

Ein derartiges Installationssystem ist beispielsweise aus der DE 40 21 013 A1 bekannt. Bei der hierin offenbarten Vorrichtung wird eine anzuschließende Geräteeinheit mittels eines höhenverstellbaren Kupplungsteils gesichert. Um die Geräteeinheit mit den erforderlichen Betriebsmitteln zu versorgen ist es jedoch bei einer Vorrichtung nach der DE 40 21 013 A1 erforderlich, die der Geräteeinheit zugeordneten Anschlüsse manuell mit den Steckkupplungen zu verbinden, die in einem Verteileranschluss gebündelt sind. Hierbei besteht jedoch stets die Gefahr, dass die Anschlüsse verwechselt werden.

Der Erfindung liegt daher die Aufgabe zugrunde, die oben genannten Nachteile zu reduzieren.

Diese Aufgabe wird bei einem Installationssystem der eingangs genannten Art dadurch gelöst, dass der Übergabeeinheit Betriebsmittelanschlüsse und der Geräteeinheit eine Übernahmeeinheit zugeordnet ist, die zu einer Auswahl der Betriebsmittelanschlüssen korrespondierende Gegenanschlüsse aufweist, zur leckagefreien und reversiblen Kopplung der Geräteeinheit mit der Übergabeeinheit. Durch die Anordnung von in der Übergabeeinheit gebündelten Betriebsmittelanschlüssen, die bereits bei Errichtung des Gebäudes eingerichtet oder auch nachgerüstet werden können, und dazu korrespondierenden Gegenanschlüssen, die im Herstellungsprozess der Geräteeinheit verbaut werden können, kann eine Installation und/oder eine Deinstallation der Geräteeinheit auch durch weniger qualifiziertes Personal erfolgen, wodurch insbesondere die Wartungskosten deutlich reduziert werden können. Somit kann beispielsweise eine defekte oder wartungsbedürftige Geräteeinheit durch eine Transportkraft deinstalliert und gegebenenfalls abtransportiert werden und durch eine funktionsfähige Geräteeinheit ausgetauscht werden. Die defekte Geräteeinheit kann dann in eine zentrale Reparatur- oder Wartungsstelle gebracht werden, wo eine Begutachtung und Reparatur durch qualifiziertes Fachpersonal erfolgt. Im Rahmen der Erfindung ist es selbstverständlich auch vorgesehen, dass in der Übergabeeinheit auch Betriebsmittel bereitgestellt werden, die zum Betrieb der Geräteeinheit nicht benötigt werden. In diesem Fall werden zu diesen Betriebsmittelanschlüssen keine korrespondierende Gegenanschlüsse an der Geräteeinheit bereitgehalten. Somit können gebäudeseitig einheitliche Übergabeeinheiten installiert werden, in denen stets dieselben Medien gebündelt sind. Dadurch kann jede Geräteeinheit an eine beliebige Übergabeeinheit angekoppelt werden.

Im Rahmen der Erfindung hat es sich zudem als günstig erwiesen, wenn eine leckageverhindernde Vorabsperreinrichtung zur selbsttätigenden Unterbrechung des Betriebsmittelflusses bei Entkopplung der Geräteeinheit von der Übergabeeinheit vorgesehen ist. Dadurch ist gewährleistet, dass beim Entkoppeln der der Geräteeinheit zugeordneten Übernahmeeinheit von der Übergabeeinheit ein Austreten von Betriebsmittel effektiv verhindert wird, wobei es sich in diesem Zusammenhang als besonders vorteilhaft gezeigt hat, wenn die flüssige und/oder gasförmige Betriebsmittel führende Betriebsmittelleitung zugeordnete Vorabsperreinrichtung als doppelwirkende Vorabsperreinrichtung ausgeführt ist, also bei Entkoppelung der Betriebsmittelanschlüsse und Gegenanschlüssen sowohl in Fließrichtung als auch entgegen der Fließrichtung abgedichtet ist. Somit ist gewährleistet, dass ein Austreten von Betriebsmitteln sowohl aus den Betriebsmittelanschlüssen als auch aus den Gegenanschlüssen verhindert wird, wenn die Geräteeinheit von der Übergabeeinheit entkoppelt wird.

Hierbei ist zu beachten, dass im Rahmen der Erfindung die Vorabsperreinrichtung so ausgebildet ist, dass - für den Fall einer Betriebsmittelzuleitung - die Abdichtung des Betriebsmittelanschlusses in Fließrichtung - also in Zulaufrichtung - und die Abdichtung des Gegenanschlusses in entgegengesetzter Richtung erfolgt, um ein Austreten von Betriebsmitteln zu unterbinden. Im Falle einer Betriebsmittelableitung erfolgt die Abdichtung selbstredend in entgegengesetzter Weise.

Als günstig hat es sich weiterhin erwiesen, wenn die der Fließrichtung entgegen wirkende Vorabsperreinrichtung mittels eines magnetischen Rückschlagventils gebildet ist, mit einem Rückstellelement, das durch einen Magneten verstellbar ist. Das Rückstellelement, das im Rahmen der Erfindung beispielsweise durch eine federbeaufschlagte eiserne Kugel gebildet sein kann, wird durch den Magneten verstellt, wobei es sich im Rahmen der Erfindung besonders bewährt hat, wenn der das jeweilige Rückschlagventil verstellende Magnet dem Betriebsmittelanschluss oder Gegenanschluss zugeordnet ist, der nicht das Rückstellelement beherbergt. Dadurch ist insbesondere gewährleistet, dass eine Verstellung des Rückstellelementes nur dann erfolgt, wenn der jeweilige Betriebsmittelanschluss mit dem Gegenanschluss gekoppelt ist.

Zudem hat es sich vorteilhaft gezeigt, wenn die in Fließrichtung wirkende Vorabsperreinrichtung durch ein mechanisches Rückschlagventil gebildet ist, das durch Koppelung mit dem korrespondierenden Betriebsmittelanschluss oder Gegenanschluss durchgängig für flüssige und/oder gasförmige Betriebsmittel ist. Dadurch ist insbesondere gewährleistet, dass nach einer Entkoppelung der Geräteeinheit von der Übergabeeinheit ein Betriebsmittelfluss in Fließrichtung unterbunden ist, wodurch eine Leckage effektiv verhindert ist.

Durch die Verwendung dieser Rückschlagventile ist damit auf effektive und sichere Art und Weise gewährleistet, dass ein Betriebsmittelfluss zwischen den Betriebsmittelanschlüssen und den Gegenanschlüssen nur dann erfolgt, wenn die Übergabeeinheit mit der Übernahmeeinheit gekoppelt ist. Somit kann die Geräteeinheit bei Bedarf einfach von der Übergabeeinheit abgenommen werden, ohne dass Gefahr besteht, dass Restmengen von in der Geräteeinheit oder den Betriebsmittelleitungen verbleibenden Betriebsmitteln die Standfläche verunreinigen.

Für die Betriebssicherheit hat es sich weiterhin günstig erwiesen, wenn mindestens eine Absperreinrichtung zur Unterbrechung des Mittelzuflusses zu der Übergabeeinheit vorgesehen ist. Durch die Absperreinrichtung ist ein zusätzlicher Schutz gegeben, um bei einer Entkopplung der Übergabeeinheit von der Übernahmeeinheit ein Austreten von Mittel effektiv zu unterbinden. Zudem kann durch die Absperreinrichtung der Betriebsmittelfluss beispielsweise auch in einem Notfall gänzlich unterbunden werden. Bezüglich der Positionierung der Absperreinrichtung ist es vorteilhaft, wenn dieses möglichst nahe an der Übergabeeinheit angebracht ist, um das zwischen der Übergabeeinheit und der Absperreinrichtung vorhandene Totvolumen zu minimieren.

Vorteilhaft ist es in diesem Zusammenhang zudem, wenn die mindestens eine Absperreinrichtung mehrfach in einer zur Zahl der Betriebsmittelleitungen korrespondierenden Anzahl vorgesehen ist, wodurch sämtliche Betriebsmittelleitungen unterbrochen werden können.

Im Rahmen der Erfindung hat es sich außerdem vorteilhaft erwiesen, wenn die Absperreinrichtungen der flüssige und/oder gasförmige Mittel führenden Betriebsmittelleitungen durch in die Betriebsmittelleitungen integrierte, vorzugsweise elektrisch verstellbare Kugelhähne gebildet sind. Durch die Ausführung der Absperreinrichtungen als Kugelhähne ist auf einfache Art und Weise gewährleistet, dass der Mittelzufluss zwischen der Übergabeeinheit und der Übernahmeeinheit bei Betätigung der Absperreinrichtung unterbrochen wird. Durch eine elektrische Verstellbarkeit der Kugelhähne wird zudem die Benutzerfreundlichkeit des Installationssystems erhöht. Im Rahmen der Erfindung ist es selbstverständlich auch vorgesehen, dass einer Elektrizität führenden Betriebsmittelleitung ebenfalls eine Absperreinrichtung zugeordnet ist. Diese kann insbesondere durch ein Relais oder einen Schaltschütz gebildet sein.

Vorteilhaft ist es zudem, wenn ein manuell zu betätigender Hauptschalter zur kollektiven Verstellung der Absperreinrichtungen vorgesehen ist. Durch eine Betätigung des Hauptschalters werden somit sämtliche Absperreinrichtungen verstellt, wodurch der Betriebsmittelfluss zwischen der Übergabeeinheit und der Übernahmeeinheit simultan unterbrochen wird. Dies dient damit ebenfalls in besonderem Maße der Sicherheit des erfindungsgemäßen Installationssystems.

Bewährt hat es sich im Rahmen der Erfindung auch, wenn ein Hebelsystem zur mechanischen Koppelung des Hauptschalters mit den Absperreinrichtungen vorgesehen ist. Durch ein derartiges Hebelsystem ist insbesondere gewährleistet, dass der Betreiber der Geräteeinheit einfach kontrollieren kann, ob sich die Absperreinrichtung in einer geschlossenen oder einer geöffneten Stellung befindet. Selbstverständlich ist es im Rahmen der Erfindung auch vorgesehen, dass Absperreinrichtungen für die Betriebsmittelleitungen, die zum Betrieb der Geräteeinheit nicht benötigte Betriebsmittel führen, nicht mit dem Hebelsystem gekoppelt sind und sich somit stets im geschlossenen Zustand befinden können. Im Rahmen der Erfindung ist es zudem auch vorgesehen, dass die Koppelung des Hauptschalters mit den Absperreinrichtungen elektronisch erfolgt. In diesem Falle bietet sich zur Kenntlichmachung geschlossener Absperreinrichtungen ein optischer Hinweis an - beispielsweise eine farbige Leuchtdiode.

Als besonders günstig hat es sich erwiesen, wenn die Positionen und/oder die Reihenfolge der Betriebsmittelanschlüsse standardisiert sind. Dadurch können gebäudeseitig die Übergabeeinheiten durch Fachpersonal mit den Betriebsmittelleitungen verbunden werden und geräteseitig die Übernahmeeinheit so angeschlossen werden, dass bei der Koppelung der Übergabeeinheit mit der Übernahmeeinheit Installationsfehler ausgeschlossen sind.

Im Rahmen der Erfindung hat es sich auch als vorteilhaft erwiesen, wenn mindestens ein mechanisches Mittel zur Verriegelung der Betriebsmittelanschlüsse mit den Gegenanschlüssen vorgesehen ist. Durch die Verriegelung der Betriebsmittelanschlüsse mit den Gegenanschlüssen wird insbesondere ein unbeabsichtigtes Trennen der Übergabeeinheit und der Übernahmeeinheit unterbunden, wodurch sichergestellt wird, dass der Betriebsmittelkreislauf nicht unterbrochen wird. Bezüglich der Anzahl der mechanischen Mittel hat es als günstig gezeigt, wenn das mechanische Mittel in einer zur Zahl der Betriebsmittelanschlüsse korrespondierenden Anzahl vorhanden ist, und wenn die Mehrzahl der mechanischen Mittel durch eine Zentralbetätigung simultan verstellbar sind, was sich positiv auf die Bedienerfreundlichkeit auswirkt. Durch die auf die Zahl der Betriebsmittelanschlüsse angepasste Anzahl der mechanischen Mittel können zudem sämtliche vorhandenen Gegenanschlüsse arretiert werden, was sich positiv auf die Betriebssicherheit des erfindungsgemäßen Installationssystems auswirkt. Zwar hat es sich in diesem Zusammenhang besonders bewährt, wenn das Mittel als eine mechanische Verriegelung gebildet ist, im Rahmen der Erfindung ist es jedoch auch vorgesehen, dass das Mittel beispielsweise durch eine elektromagnetische Verriegelung realisiert ist.

Weiterhin ist es sich besonders vorteilhaft gezeigt, wenn ein aus einem Schließkloben und einer korrespondierenden Schließklobenaufnahme bestehender Verriegelungsmechanismus zur Arretierung der Übergabeeinheit mit der Übernahmeeinheit vorgesehen ist. Damit ist sichergestellt, dass die vorgenannten mechanischen Mittel nicht ausschließlich für die Arretierung der Geräteeinheit verantwortlich zeigen, was sich wiederum positiv auf die Stabilität der Verbindung zwischen der Geräteeinheit und der Übergabeeinheit auswirkt.

Weiterhin hat es sich als günstig erwiesen, wenn gebäudeseitig ein die Geräteinheit aufnehmendes Gerätegehäuse vorgesehen ist, und wenn dem Gerätegehäuse Führungselemente zur Führung der Geräteeinheit zugeordnet sind. Durch ein derartiges Gerätegehäuse ist die Geräteeinheit zusätzlich geschützt, was sich wiederum positiv auf die Länge der Wartungsintervalle auswirkt. Weiterhin wird durch die Führungselemente das Einführen der Geräteeinheit in das Gerätegehäuse bei der Installation erleichtert, wodurch sich die Koppelung der Betriebsmittelanschlüsse mit den Gegenanschlüssen vereinfacht.

Als vorteilhaft hat es sich zudem gezeigt, wenn die Betriebsmittel einer Gruppe entstammen, die Warmwasser, Kaltwasser, Abwasser, Druckluft, Strom, flüssige Chemikalien, Hydraulikflüssigkeit und Daten beinhaltet. Dadurch werden insbesondere die Mittel bereitgestellt, für deren Anschluss sonst Fachpersonal benötigt würde. Zudem kann durch die Übertragung von Daten auf die Geräteeinheit die Steuerung der Geräteeinheit durch eine zentrale Steuerungseinrichtung erfolgen.

Zur Ermittlung mittelspezifischer Daten hat es sich vorteilhaft erwiesen, wenn ein Prüfgerät zwischen der Übergabeeinheit und der Übernahmeeinheit schaltbar ist. Dadurch kann insbesondere der Betriebsmittelfluss zwischen der Übergabeeinheit und Übernahmeeinheit überwacht werden, um damit beispielsweise die Funktionalität der Geräteeinheit zu kontrollieren. Im Rahmen der Erfindung ist es auch vorgesehen, dass das Prüfgerät über einen Speicher verfügt und/oder mit einem Drucker verbunden ist, wodurch insbesondere eine Dokumentation der Betriebsmittelspezifischen Daten gewährleistet ist.

Insbesondere bietet sich dieses Installationssystem zum Installieren von Desinfektionsanlagen, Waschmaschinen, Geschirrspülmaschinen oder Kaffeemaschinen an. Zwar ist es vorgesehen, dass die Übernahmeeinheit integral mit der Geräteeinheit gebildet ist. Im Rahmen der Erfindung ist es jedoch auch denkbar, dass die Übernahmeeinheit nachträglich mit der Geräteeinheit verbunden werden kann, wodurch ein Nachrüsten einer beliebigen Geräteeinheit möglich ist.

Im Folgenden wird die Erfindung an in der Zeichnung dargestellten Ausführungsbeispielen näher erläutert; es zeigen:
- Fig. 1: einen gebäudeseitigen Teil eines Installationssystems,
- Fig. 2: eine perspektivische Ansicht einer Übernahmeeinheit einer Geräteeinheit,
- Fig. 3: eine Detailansicht eine Betriebsmittelanschlusses und eines korrespondierenden Gegenanschlusses,
- Fig. 4: einen gebäudeseitigen Teil eines Installationssystems mit einem Gerätegehäuse, und
- Fig. 5: das Installationssystem nach Fig. 4 mit einer installierten Geräteeinheit.

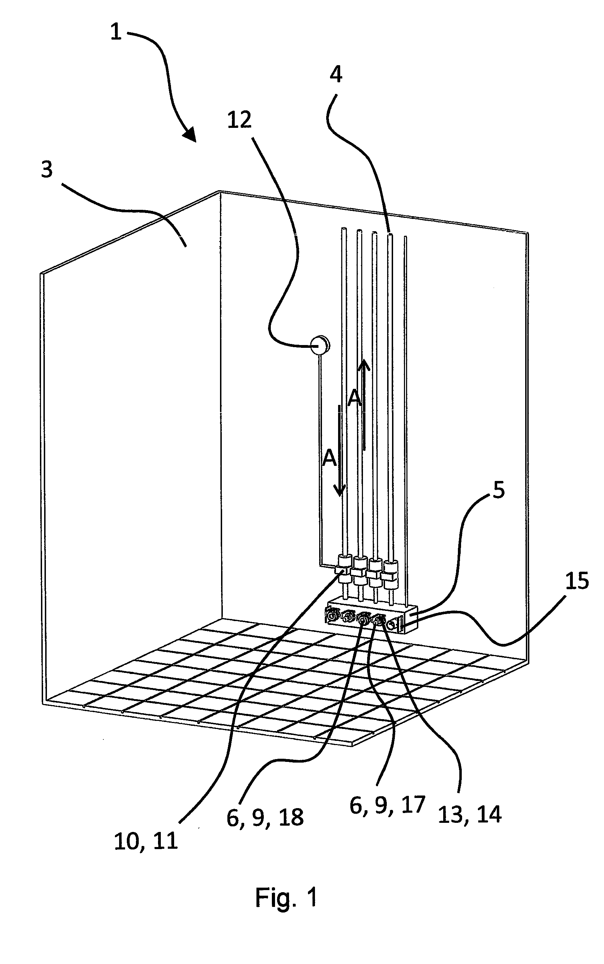

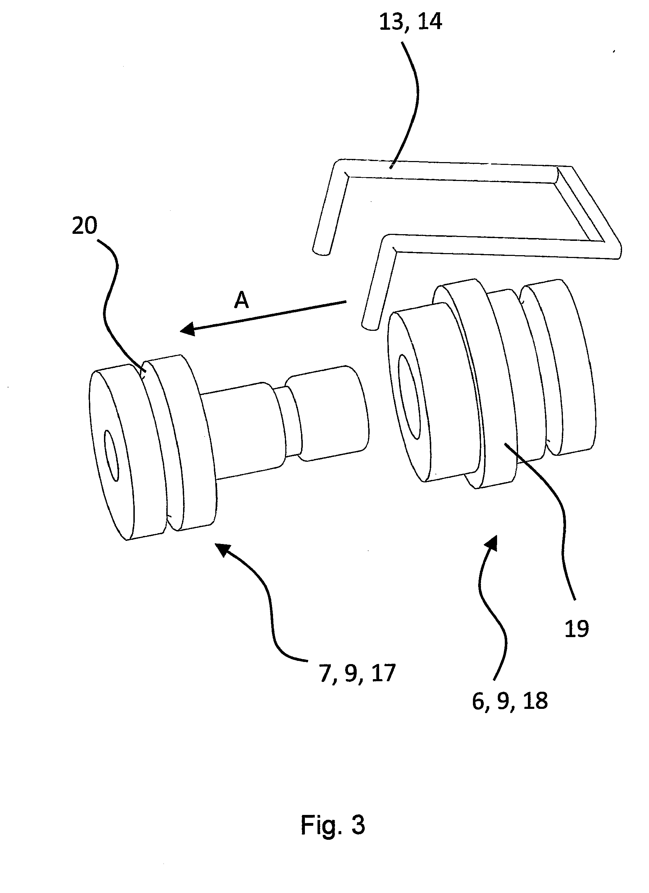

Figur 1 zeigt ein erstes Ausführungsbeispiel eines Installationssystems 1 zum Installieren einer Geräteeinheit 2 in einem Gebäude 3. Innerhalb des Gebäudes 3 befinden sich dabei Betriebsmittelleitungen 4, in denen die für den Betrieb der Geräteeinheit 2 benötigten Betriebsmittel verlaufen. Die Betriebsmittelleitungen 4 münden in einer Übergabeeinheit 5, die Betriebsmittelanschlüsse 6 aufweist, die mit korrespondierenden Gegenanschlüssen 7 koppelbar sind, die einer in der Geräteeinheit 2 integrierten Übernahmeeinheit 8 zugeordnet sind. In dem in der Zeichnung dargestellten Ausführungsbeispiel sind neben einer Betriebsmittelleitung 4 für Elektrizität auch zwei Betriebsmittelleitungen 4 für Zu- und Abwasser und ein weiteres Paar Betriebsmittelleitungen 4 für Gase vorgesehen. Die Reihenfolge der Betriebsmittelanschlüsse 6 ist dabei standardisiert, wodurch eine Verwechselung der Betriebsmittelanschlüsse 6 beim Installieren der Geräteeinheit 2 nicht erfolgen kann. Um im entkoppelten Zustand ein ungewolltes Austreten der Betriebsmittel aus den Betriebsmittelanschlüssen 6 zu verhindern, sind den Betriebsmittelanschlüssen 6 Vorabsperreinrichtungen 9 zugeordnet, die in dem gezeigten Ausführungsbeispiele erst bei Koppelung mit den korrespondierenden Gegenanschlüssen 7 durchlässig für die Betriebsmittel sind. Somit können flüssige und/oder gasförmige Betriebsmittel im nichtgekoppelten Zustand aus den Betriebsmittelanschlüssen 6 nicht austreten, wobei sich, wie in Bezug auf Figur 3 noch näher erläutert wird, die Art der Vorabsperreinrichtungen 9 in Abhängigkeit der durch den Pfeil A angedeuteten Fließrichtung der Betriebsmittel unterscheidet. Als weitere Sicherungsmaßnahme sind zudem Absperreinrichtungen 10 zur Unterbrechung des Mittelzuflusses zu der Übergabeeinheit 5 vorgesehen. In dem in der Figur 1 dargestellten Ausführungsbeispiel sind die Absperreinrichtungen 10 durch elektrisch verstellbare Kugelhähne 11 gebildet, die durch einen Hauptschalter 12 kollektiv verstellt werden können. Weiterhin ist ein mechanisches Mittel 13 zur Verriegelung der Betriebsmittelanschlüsse 6 mit der Geräteeinheit 2 zugeordneten Gegenanschlüssen 7 vorgesehen, wobei das mechanische Mittel 13 als eine mechanische Verriegelung 14 gebildet ist, die durch eine Zentralbetätigung kollektiv verschwenkt werden können, um die Betreibmittelanschlüsse 6 mit den Gegenanschlüssen 7 zu verriegeln. Weiterhin ist der Figur 1 eine Schließklobenaufnahme 15 zu entnehmen, die die Übergabeeinheit 5 mit einem der Übernahmeeinheit 8 zugeordneten Schließkloben 16 koppelt.

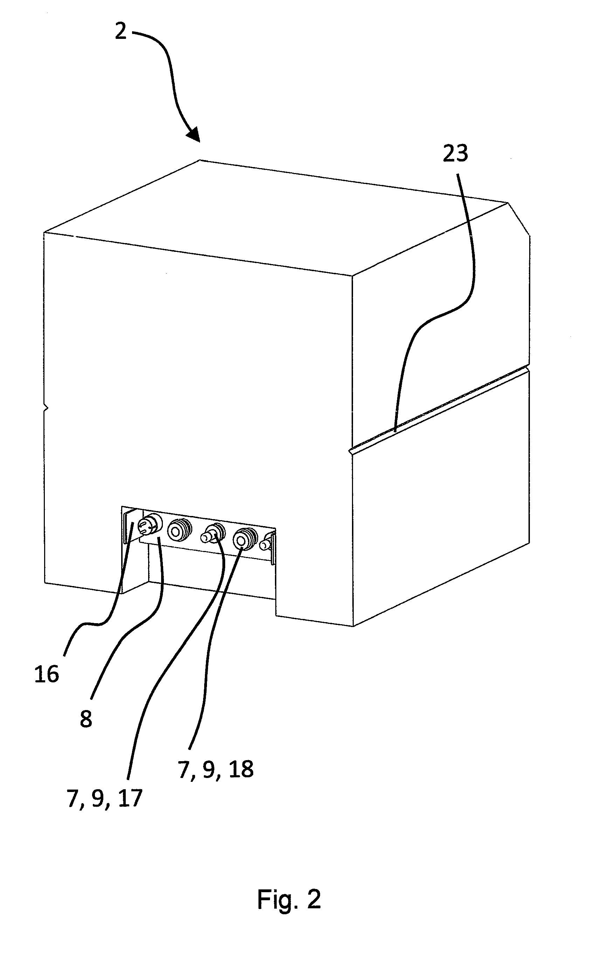

Figur 2 zeigt eine perspektivische Ansicht der Übernahmeeinheit 8 der Geräteeinheit 2, der zur Koppelung mit dem gebäudeseitigen Teil des Installationssystems 1 die zu den Betriebsmittelanschlüssen 6 korrespondierenden Gegenanschlüsse 7 zugeordnet sind. Die Gegenanschlüsse 7 weisen dabei ebenfalls Vorabsperreinrichtungen 9 auf die bei einer entkoppelten Geräteeinheit 2 eine Leckage der in der Geräteinheit 2 befindlichen Betriebsmittelresten unterbindet. Ebenfalls aus der Figur 2 ist der geräteseitige Teil der mechanischen Verriegelung 14 ersichtlich, die der Verriegelung der Betriebsmittelanschlüsse 6 mit den Gegenanschlüssen 7 dient. Bei der Koppelung der Betriebsmittelanschlüsse 6 mit den Gegenanschlüssen 7 werden neben der mechanischen Verriegelung 14 auch der Schließkloben 16 und die dazu korrespondierende Schließklobenaufnahme 15, die der Übergabeeinheit 5 zugeordnet ist, verriegelt, wodurch eine unbeabsichtigte Trennung effektiv unterbunden ist.

Figur 3 zeigt in einer perspektivischen Detailansicht den Betriebsmittelanschluss 6 und den dazu korrespondierenden Gegenanschluss 7, wobei die Fließrichtung des Betriebsmittels durch den Pfeil A angedeutet ist. Um bei der Trennung des Betriebsmittelanschlusses 6 von dem Gegenanschluss 7 eine Leckage des Betriebsmittels zu verhindern, ist dem Gegenanschluss 7 ein magnetisches Rückschlagventil 17 und dem Betriebsmittelanschluss 6 ein mechanisches Rückschlagventil 18 zugeordnet, die jeweils als Vorabsperreinrichtung 9 dienen. Das magnetische Rückschlagventil 17 besteht dabei aus einem dem Betriebsmittelanschluss 6 zugeordneten Magneten 19 und einem in der Zeichnung nicht dargestellten magnetischen Rückstellelement, das innerhalb des Gegenanschlusses 7 axial verschiebbar gelagert ist. Bei der Koppelung des Betriebsmittelanschlusses 6 mit dem Gegenanschluss 7 wird das magnetische Rückstellelement durch den Magneten 19 innerhalb des Gegenanschlusses 7 axial verschoben, wodurch der Gegenanschluss 7 für das Betriebsmittel durchgängig ist. Der Gegenanschluss 7 dient zudem dazu, das in dem Betriebsmittelanschluss 6 befindliche mechanische Rückschlagventil 18 bei der Koppelung des Betriebsmittelanschlusses 6 mit dem Gegenanschluss 7 so zu schalten, dass das Betriebsmittel von dem Betriebsmittelanschluss 6 in den Gegenanschluss 7 fließen kann. Durch die in der Figur 3 dargestellte Ausführungsform ist also eine doppelwirkende Vorabsperreinrichtung 8 realisiert, also insbesondere gewährleistet, dass ein Medienfluss nur dann erfolgt, wenn der Gegenanschluss 7 mit dem Betriebsmittelanschluss 6 gekoppelt ist. Weiterhin ist in Figur 3 die mechanische Verriegelung 14 dargestellt, die durch eine Zentralbetätigung so verstellt werden kann, dass es in eine an dem Gegenanschluss 7 ausgebildete Aussparung 20 eingreifen kann, um den Betriebsmittelanschluss 6 mit dem Gegenanschluss 7 zu verriegeln. Im Falle einer Umkehrung der Fließrichtung des Betriebsmediums - beispielsweise bei einer Betriebsmittelableitung - ist die Anordnung des Betriebsmittelanschlusses 6 und des korrespondierenden Gegenanschlusses 7 zu vertauschen, so dass sich die in der Figur 3 dargestellte Anordnung von Betriebsmittelanschluss 6 und korrespondierendem Gegenanschluss 7 im Bezug zu der der mechanischen Verriegelung 14 vertauscht ist und das magnetische Rückschlagventil 17 dem Betriebsmittelanschluss 6 und das mechanische Rückschlagventil 18 dem Gegenanschluss 7 zugeordnet ist.

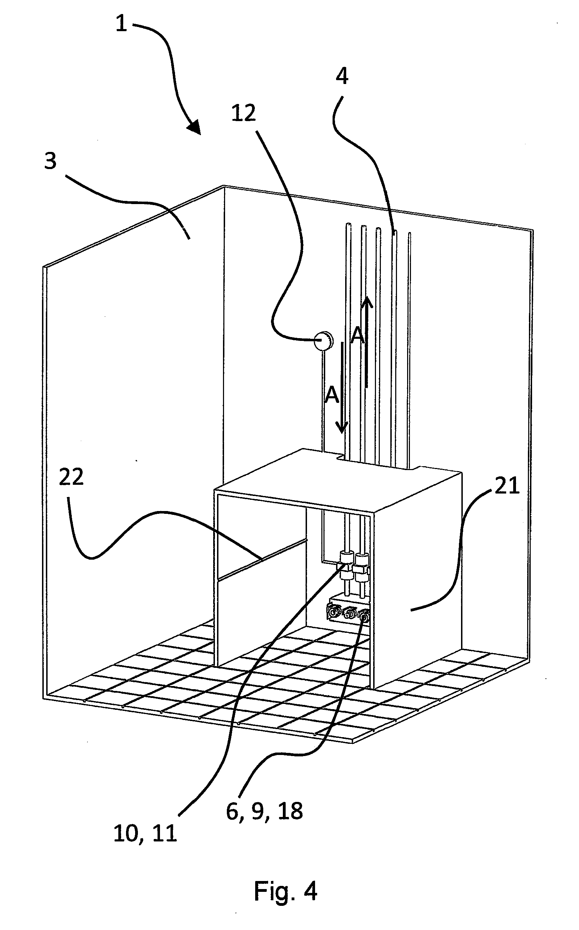

Figur 4 zeigt eine weitere Ausführungsform eines erfindungsgemäßen Installationssystems 1. Hierbei ist gebäudeseitig zusätzlich ein die Geräteeinheit 2 aufnehmendes Gerätegehäuse 21 vorgesehen. Das Gerätegehäuse 21, dessen Abmessungen im Wesentlichen den Dimensionen der Geräteeinheit 2 entsprechen, dient dabei hauptsächlich dem Schutz der Geräteeinheit 2 und erleichtert dessen Installation. Hierzu sind dem Gerätegehäuse 21 Führungselemente 22 zur Führung der Geräteeinheit 2 zugeordnet, wodurch die Geräteeinheit 2 einfach in das Gerätegehäuse 21 eingeführt werden kann.

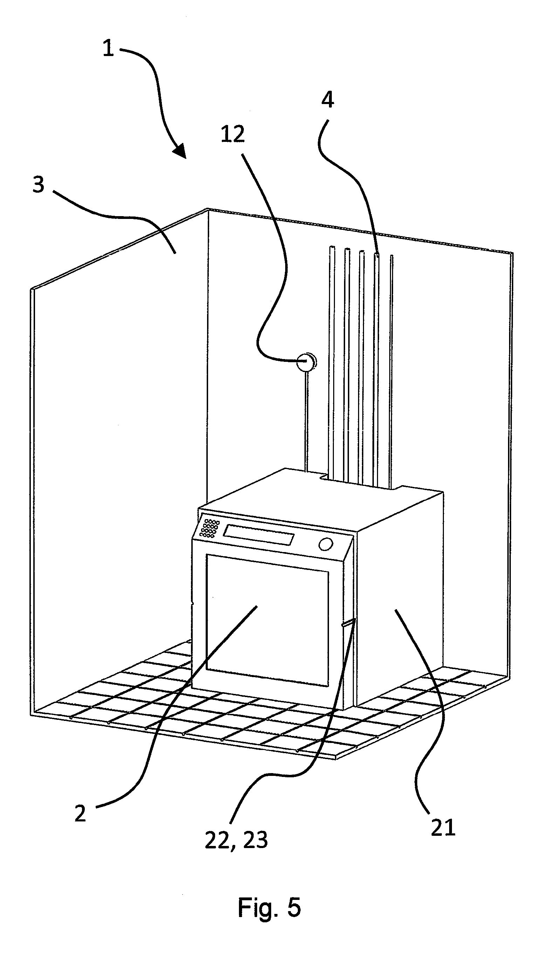

In Figur 5 ist das Installationssystem 1 aus Figur 4 mit der in das Gerätegehäuse 21 eingesetzten Geräteeinheit 2 dargestellt. Wie der Figur 5 zu entnehmen ist, weist die Geräteeinheit 2 eine Führungsnut 23 auf, die mit den Führungselementen 22 des Gerätegehäuses 21 wechselwirken kann, um ein Einführen der Geräteeinheit 2 in das Gerätegehäuse 21 zu erleichtern.

Im Folgenden wird noch einmal die Deinstallation der Geräteeinheit 2 beschrieben. Hierzu wird durch die deinstallierende Person, die aufgrund der in dem Gebäude 3 bereits durch qualifiziertes Fachpersonal vorinstallierten Betriebsmittelleitungen 4, die mit der Übergabeeinheit 5 verbunden worden sind, auch eine weniger qualifizierte Kraft sein kann, zunächst die Absperreinrichtung 10 geschlossen, um den Fluss des Betriebsmittels zu der Übergabeeinheit 5 zu unterbrechen. Hierzu muss lediglich der Hauptschalter 12 betätigt werden, wodurch die als Kugelhähne 11 gebildeten Absperreinrichtungen 10 geschlossen werden. In einem zweiten Schritt werden durch die Betätigung der Zentralbetätigung die mechanischen Verriegelungen 14 simultan gelöst, welche die in der Übergabeeinheit 5 angeordneten Betriebsmittelanschlüsse 6 mit den dazu korrespondierenden Gegenanschlüssen 7 mechanisch koppeln, die in der der Geräteinheit 2 zugeordneten Übernahmeeinheit 8 gebündelt sind. Zeitgleich wird durch die Betätigung der Zentralbetätigung auch der aus dem Schließkloben 16 und der Schließklobenaufnahme 15 gebildete Verriegelungsmechanismus gelöst, der die Übernahmeeinheit 8 mit der Übergabeeinheit 5 verriegelt. Durch das Lösen der mechanischen Verriegelung 14 und des Verriegelungsmechanismus kann nun die deinstallierende Person die Geräteeinheit 2 aus dem Gerätegehäuse 21 entnehmen. Bei der Entnahme der Geräteeinheit 2 werden durch die Trennung der Betriebsmittelanschlüsse 6 von den dazu korrespondierenden Gegenanschlüssen 7 die Vorabsperreinrichtungen automatisch 9 geschlossen, die den Betriebsmittelanschlüssen 6 und den Gegenanschlüssen 7 zugeordnet sind und die durch mechanische Rückschlagventile 18 und magnetische Rückschlagventile 17 gebildet sind. Dadurch wird bei der Demontage der Geräteeinheit 2 ein Austreten von Betriebsmitteln sowohl aus der der Geräteeinheit 2 zugeordneten Übernahmeeinheit 8 als auch aus der Übergabeeinheit 5 effektiv verhindert. Durch die in dem Gerätegehäuse 21 ausgebildeten Führungselemente 22 und die dazu korrespondierenden Führungsnuten 23, die in der Geräteeinheit 2 ausgebildet sind, wird die Demontage der Geräteeinheit 2 erleichtert. Die Geräteeinheit 2 kann nun durch die deinstallierende Person gänzlich aus dem Gerätegehäuse 21 entnommen werden und an eine zentrale Wartungs- oder Reparaturstätte gebracht werden.

Die Installation und Montage der Geräteeinheit 2 erfolgt im Wesentlichen in umgekehrter Reihenfolge, wobei bei dem Einsetzen der Geräteeinheit 2 in das Gerätegehäuse 21 die Betriebsmittelanschlüsse 6 mit den dazu korrespondierenden Gegenanschlüssen 7 automatisch gekoppelt werden und durch die mechanische Verriegelung 14 fest miteinander verbunden werden, wodurch eine unbeabsichtigte Entkoppelung verhindert wird. Dies wird zusätzlich durch den aus Schließkloben 16 und Schließklobenaufnahme 15 bestehenden Verriegelungsmechanismus unterstützt, der sich ebenfalls selbsttätigend schließt. Durch die Koppelung der Betriebsmittelanschlüsse 6 mit den Gegenanschlüssen 7 werden auch die Vorabsperreinrichtungen 9 durchgängig. Somit können nun durch eine erneute Betätigung des Hauptschalters 12 die als Kugelhähne 11 gebildeten Absperreinrichtungen 10 geöffnet werden, wodurch die für den Betrieb der Geräteeinheit 2 benötigten Betriebsmittel bereitgestellt werden.

### Bezugszeichenliste

- 1: Installationssystem
- 2: Geräteeinheit
- 3: Gebäude
- 4: Betriebsmittelleitung
- 5: Übergabeeinheit
- 6: Betriebsmittelanschluss
- 7: Gegenanschluss
- 8: Übernahmeeinheit
- 9: Vorabsperreinrichtung
- 10: Absperreinrichtung
- 11: Kugelhahn
- 12: Hauptschalter
- 13: mechanisches Mittel
- 14: mechanische Verriegelung
- 15: Schließklobenaufnahme
- 16: Schließkloben
- 17: magnetisches Rückschlagventil
- 18: mechanisches Rückschlagventil
- 19: Magnet
- 20: Aussparung
- 21: Gerätegehäuse
- 22: Führungselement
- 23: Führungsnut
- A: Fließrichtung

## Patentansprüche

1. Installationssystem zum Installieren einer Geräteeinheit (2) in einem Gebäude (3), mit einer gebäudeseitig Betriebsmittelleitungen (4) für Fluide und gegebenenfalls Elektrizität aufweisenden Übergabeeinheit (5), der Betriebsmittelanschlüsse (6) zugeordnet sind, **dadurch gekennzeichnet, dass** der Geräteeinheit (2) eine Übernahmeeinheit (8) zugeordnet ist, die zu einer Auswahl der Betriebsmittelanschlüssen (6) korrespondierende Gegenanschlüsse (7) aufweist, zur leckagefreien und reversiblen Kopplung der Geräteeinheit (2) mit der Übergabeeinheit (5).

2. Installationssystem nach Anspruch 1, **dadurch gekennzeichnet, dass** eine leckageverhindernde Vorabsperreinrichtung (9) zur selbsttätigenden Unterbrechung des Betriebsmittelflusses bei Entkopplung der Geräteeinheit (2) von der Übergabeeinheit (5) vorgesehen ist.

3. Installationssystem nach Anspruch 2, **dadurch gekennzeichnet, dass** die flüssige und/oder gasförmige Betriebsmittel führende Betriebsmittelleitung (4) zugeordnete Vorabsperreinrichtung (9) als doppelwirkende Vorabsperreinrichtung (9) ausgeführt ist, also bei Entkoppelung der Betriebsmittelanschlüsse (6) und Gegenanschlüssen (7) sowohl in Fließrichtung als auch entgegen der Fließrichtung abgedichtet ist.

4. Installationssystem nach Anspruch 2 oder 3, **dadurch gekennzeichnet, dass** die der Fließrichtung entgegen wirkende Vorabsperreinrichtung (9) mittels eines magnetischen Rückschlagventils (17) gebildet ist, mit einem Rückstellelement, das durch einen Magneten (19) verstellbar ist.

5. Installationssystem nach Anspruch 4, **dadurch gekennzeichnet, dass** der das jeweilige Rückschlagventil verstellende Magnet (19) dem Betriebsmittelanschluss (6) oder Gegenanschluss (7) zugeordnet ist, der nicht das Rückstellelement beherbergt.

6. Installationssystem nach einem der Ansprüche 2 bis 5, **dadurch gekennzeichnet, dass** die in Fließrichtung wirkende Vorabsperreinrichtung (9) durch ein mechanisches Rückschlagventil (18) gebildet ist, das durch Koppelung mit dem korrespondierenden Betriebsmittelanschluss (6) oder Gegenanschluss (7) durchgängig für flüssige und/oder gasförmige Betriebsmittel ist.

7. Installationssystem nach einem der Ansprüche 1 bis 6, **dadurch gekennzeichnet, dass** mindestens eine Absperreinrichtung (10) zur Unterbrechung des Betriebsmittelzuflusses zu der Übergabeeinheit (5) vorgesehen ist.

8. Installationssystem nach Anspruch 7, **dadurch gekennzeichnet, dass** die mindestens eine Absperreinrichtung (10) mehrfach in einer zur Zahl der Betriebsmittelleitungen (4) korrespondierenden Anzahl vorgesehen ist.

9. Installationssystem nach Anspruch 8, **dadurch gekennzeichnet, dass** die Absperreinrichtungen (10) der flüssige und/oder gasförmige Betriebsmittel führenden Betriebsmittelleitungen (4) durch in die Betriebsmittelleitungen (4) integrierte, vorzugsweise elektrisch verstellbare, Kugelhähne (11) gebildet sind.

10. Installationssystem nach einem der Ansprüche 7 bis 9, **dadurch gekennzeichnet, dass** ein manuell zu betätigender Hauptschalter (12) zur kollektiven Verstellung der Absperreinrichtungen (10) vorgesehen ist.

11. Installationssystem nach Anspruch 10, **dadurch gekennzeichnet, dass** ein Hebelsystem zu mechanischen Koppelung des Hauptschalters (12) mit den Absperreinrichtungen (10) vorgesehen ist.

12. Installationssystem nach einem der Ansprüche 1 bis 11, **dadurch gekennzeichnet, dass** die Positionen und/oder die Reihenfolge der Betriebsmittelanschlüsse (6) standardisiert sind.

13. Installationssystem nach einem der Ansprüche 1 bis 12, **dadurch gekennzeichnet, dass** mindestens ein mechanisches Mittel (13) zur Verriegelung der Betriebsmittelanschlüsse (6) mit den Gegenanschlüssen (7) vorgesehen ist.

14. Installationssystem nach Anspruch 13, **dadurch gekennzeichnet, dass** das mechanische Mittel (13) in einer zur Zahl der Betriebsmittelanschlüsse korrespondierenden Anzahl vorhanden ist, und dass die Mehrzahl der mechanischen Mittel (13) mittels einer Zentralbetätigung simultan verstellbar sind.

15. Installationssystem nach einem der Ansprüche 1 bis 14, **dadurch gekennzeichnet, dass** ein aus einem Schließkloben (16) und einer korrespondierenden Schließklobenaufnahme (15) bestehender Verriegelungsmechanismus zur Arretierung der Übergabeeinheit (5) mit der Übernahmeeinheit (8) vorgesehen ist.

16. Installationssystem nach einem der Ansprüche 1 bis 15, **dadurch gekennzeichnet, dass** gebäudeseitig ein die Geräteinheit (2) aufnehmendes Gerätegehäuse (21) vorgesehen ist, und dass dem Gerätegehäuse (21) Führungselemente (22) zur Führung der Geräteeinheit (2) zugeordnet sind.

17. Installationssystem nach einem der Ansprüche 1 bis 16, **dadurch gekennzeichnet, dass** die Betriebsmittel einer Gruppe entstammen, die Warmwasser, Kaltwasser, Abwasser, Druckluft, Strom, flüssige Chemikalien, Hydraulikflüssigkeit und Daten beinhaltet.

18. Installationssystem nach einem der Ansprüche 1 bis 17, **dadurch gekennzeichnet, dass** zur Ermittlung mittelspezifischer Daten ein Prüfgerät zwischen der Übergabeeinheit (5) und der Übernahmeeinheit (8) schaltbar ist.
